# DEMANDE DE BREVET EUROPEEN

(11) **EP 1 072 475 A1**
(43) Date de publication de la demande: **31.01.2001**
(21) Numéro de dépôt: 00402133.3
(22) Date de dépôt: 26.07.2000
(51) Int. Cl.: B60R 16/00

(54) **Ensemble avertisseur sonore pour haut de colonne de direction, actionné par un coussin gonflant**

(30) Priorité: 28.07.1999 FR 9909791
(71) Demandeur: SC2N, 78180 Montigny-le-Bretonneux (FR)
(72) Inventeur: Hallet, Michel, 14320 Clinchamps/Orne (FR)
(74) Mandataire: Texier, Christian

(57) **Abrégé**

La présente invention concerne un ensemble pour haut de colonne de véhicule automobile adapté pour assurer l'alimentation d'un avertisseur, notamment d'un avertisseur sonore, lors de la mise en oeuvre d'un coussin gonflable, caractérisé par le fait qu'il comprend deux séries de contacts électriques (110, 120), supportées respectivement par le haut de colonne et par le volant, les deux séries de contacts électriques (110, 120) étant isolées au repos, la série de contacts électriques (110) portés par le haut de colonne étant reliée au faisceau de véhicule (113, 115), tandis que la série de contacts (120) portée par le volant est adaptée pour être déplacée en appui contre les contacts (110) liés au haut de colonne lors de la mise en oeuvre du coussin gonflable (30).

## Description

La présente invention concerne le domaine des ensembles pour haut de colonne de direction de véhicules automobiles.

Plus précisément, la présente invention concerne un ensemble avertisseur sonore pour haut de colonne de direction, actionné par un coussin gonflant de sécurité.

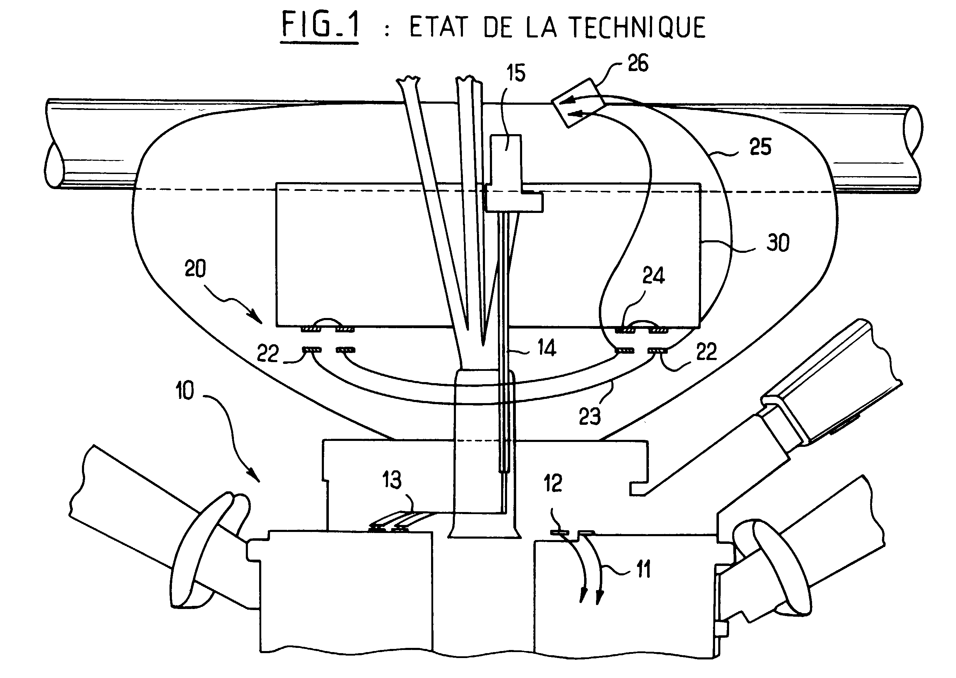

On a illustré sur la figure 1 annexée la structure connue d'un tel ensemble.

On aperçoit sur la figure 1 annexée un ensemble comprenant un module haut de colonne 10 et un module volant 20.

Le module haut de colonne 10 comprend deux pistes avertisseurs circulaires 12 (par exemple supportées par le haut de colonne) et deux frotteurs 13 en regard (par exemple supportés par le volant, ou inversement).

Les éléments du module haut de colonne 10 supportés par le haut de colonne (ici les pistes 12) sont liés au faisceau véhicule en 11.

Les éléments du module 10 supportés par le volant (ici les frotteurs 13) sont liés à un connecteur 15 via un faisceau mobile 14.

Le module volant 20 comporte un système de contactage formé par des contacts fixes 22 sur le volant et des contacts en regard, mobiles 24, liés au coussin flottant 30.

Différents secteurs fixes 22 sont reliés entre eux par un faisceau interne 23.

Les contacts fixes 22 sont par ailleurs reliés à un faisceau externe 25 équipé d'un connecteur 26 compatible avec le connecteur 15 du module 10.

Le fonctionnement de l'ensemble connu illustré sur la figure 1 est le suivant.

Lorsque le coussin flottant 30 est actionné pour établir une fonction avertisseur, il provoque un déplacement des contacts 24 selon l'axe de la colonne et entraîne une liaison directe entre les contacts fixes 22 et les contacts mobiles 24. Les contacts fixes 22 sont alors shuntés par un pont conducteur placé entre les contacts mobiles 24.

On obtient ainsi une information "circuit fermé" transmise par le faisceau 25, les connecteurs 26 et 15, le faisceau 14, les frotteurs 13, les pistes 12 et le faisceau 11, pour alimenter une fonction avertisseur.

Un tel ensemble a déjà rendu de grands services.

La présente invention a cependant pour but de proposer de nouveaux moyens permettant de perfectionner l'état de la technique, notamment en simplifiant la structure des dispositifs connus pour en améliorer encore la fiabilité.

Un autre but de la présente invention est de proposer de tels moyens sans élever le prix de revient d'un tel ensemble.

On connaît en effet différentes voies pour améliorer la fiabilité des ensembles du type illustré sur la figure 1 annexée, équipant de nos jours certains véhicules automobiles. Ces propositions connues de perfectionnements consistent généralement à réaliser les pistes 12 et les frotteurs 13 associés, en un matériau noble, pour assurer un contact permanent fiable entre ces éléments, bien que ceux-ci soient soumis à un déplacement relatif quasi permanent, au rythme de la rotation du volant.

Ces propositions connues tendent certes à améliorer notablement la fiabilité du système. Elles conduisent toutefois à un surcoût non négligeable.

Les buts précités sont atteints dans le cadre de la présente invention, grâce à un ensemble pour haut de colonne de direction de véhicule automobile comprenant deux séries de contacts électriques, supportées respectivement par le haut de colonne et par un volant, les deux séries de contacts électriques étant isolées au repos, la série de contacts électriques portés par le haut de colonne étant reliée au faisceau du véhicule, tandis que la série de contacts portée par le volant est adaptée pour être déplacée en appui contre les contacts liés au haut de colonne lors de la mise en oeuvre d'un coussin gonflable.

D'autres caractéristiques, buts et avantages de la présente invention apparaîtront à la lecture de la description détaillée qui va suivre et en regard des dessins annexés, donnés à titre d'exemple non limitatif et sur lesquels :
- la figure 1 précédemment décrite illustre une structure connue conforme à l'état de la technique, et
- la figure 2 représente la structure d'un ensemble conforme à la présente invention.

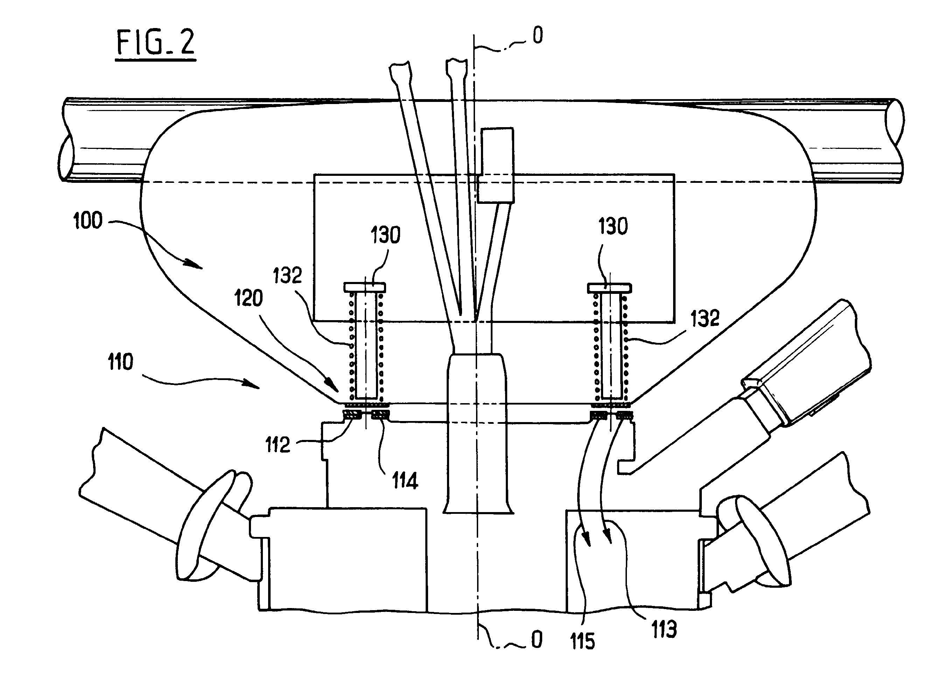

L'ensemble 100 conforme à la présente invention illustré sur la figure 2 annexée, comprend une première série de contacts électriques 110 supportés par le haut de colonne. Cette première série de contacts électriques 110 comprend de préférence deux pistes circulaires 112,114, en matériau électriquement conducteur coplanaires et concentriques de l'axe O-O de la colonne de direction. Ces deux contacts 112, 114 sont reliés au faisceau électrique interne du véhicule par l'intermédiaire de liaisons 113, 115.

L'ensemble 100 comprend également une deuxième série de contacts électriques 120 supportés par le volant, en regard des contacts précités 112, 114.

Cette deuxième série de contacts électriques 120 peut être formée de deux pistes reliées entre elles disposées respectivement en regard des contacts 112, 114.

Cependant, de préférence, la deuxième série de contacts électriques 120 est formée d'une bague unique en matériau électriquement conducteur, concentrique de l'axe O-O et placée en regard des contacts 112,114.

Au repos la deuxième série de contacts 120 est séparée et donc isolée électriquement des contacts 112, 114.

Cependant, lors de l'activation du coussin gonflable 30, le deuxième contact 120 est déplacé en rapprochement des contacts 112, 114 pour relier ceux-ci.

Le signal "circuit fermé" alors disponible entre les deux fils 113,115 du faisceau véhicule permet l'alimentation d'un avertisseur sonore adéquat et de toute(s) fonction(s) associé(s).

Plus précisément encore, de préférence dans le cadre de la présente invention, le contact 120 est sollicité par le coussin gonflable 30 par l'intermédiaire de colonnes 130 associées chacune à un moyen de rappel élastique respectif 132. Ces ressorts 132 maintiennent les colonnes 130 (et ce faisant le contact 120) ainsi que le coussin 30, éloignés des contacts 112, 114, au repos.

Les colonnes 130 sont placées entre le coussin 30 et le contact 120. On peut ainsi prévoir trois colonnes 130 équi-réparties autour de l'axe O-O.

La présente invention offre de nombreux avantages par rapport à la structure antérieure connue conforme à l'état de la technique, illustré sur la figure 1.

La présente invention permet de supprimer la liaison électrique permanente définie entre les pistes 12 et les frotteurs 13, selon l'état de la technique. La présente invention permet ainsi de supprimer une source de perte de couple et de bruit.

La présente invention permet de supprimer le module volant 20 illustré sur la figure 1.

La présente invention permet de simplifier la liaison électrique de l'ensemble.

La présente invention permet en particulier de supprimer la connectique 15/26 illustrée sur la figure 1.

Bien entendu la présente invention n'est pas limitée au mode de réalisation particulier qui vient d'être décrit, mais s'étend à toutes variantes conformes à son esprit.

En particulier, on peut envisager d'associer les moyens élastiques 132 aux contacts 110 portés par le haut de colonne.

Par ailleurs, on peut envisager de supprimer la bague 120 en utilisant des colonnes 130 en matériau électriquement conducteur.

## Revendications

1. Ensemble pour haut de colonne de véhicule automobile adapté pour assurer l'alimentation d'un avertisseur, notamment d'un avertisseur sonore, lors de la mise en oeuvre d'un coussin gonflable, caractérisé par le fait qu'il comprend deux séries de contacts électriques (110, 120), supportées respectivement par le haut de colonne et par le volant, les deux séries de contacts électriques (110, 120) étant isolées au repos, la série de contacts électriques (110) portés par le haut de colonne étant reliée au faisceau de véhicule (113, 115), tandis que la série de contacts (120) portée par le volant est adaptée pour être déplacée en appui contre les contacts (110) liés au haut de colonne lors de la mise en oeuvre du coussin gonflable (30).

2. Ensemble selon la revendication 1, caractérisé par le fait que la série de contacts électriques (110) portés par le haut de colonne comporte deux pistes circulaires (112, 114) coplanaires et concentriques de l'axe (O-O) de la colonne de direction.

3. Ensemble selon la revendication 2, caractérisé par le fait que les pistes (112, 114) sont reliées à des fils de liaison respectifs (113, 115).

4. Ensemble selon l'une des revendications 1 à 3, caractérisé par le fait que l'une au moins des deux séries de contacts électriques (110, 120) est associée à des moyens élastiques (132).

5. Ensemble selon l'une des revendications 1 à 4, caractérisé par le fait que les contacts (120) portés par le volant sont associés à des moyens élastiques (132).

6. Ensemble selon l'une des revendications 1 à 5, caractérisé par le fait que les contacts (120) portés par le volant sont associés à des colonnes (130) sollicitées par ressort (132).

7. Ensemble selon la revendication 6, caractérisé par le fait qu'il comprend trois colonnes (130) équi-réparties autour de l'axe de la colonne de direction.

8. Ensemble selon l'une des revendications 6 ou 7, caractérisé par le fait que les colonnes (130) sont au moins partiellement électriquement conductrices de sorte qu'elles relient les contacts (112,114) portés par le haut de colonne lors de la mise en oeuvre du coussin gonflable (30).

9. Ensemble selon l'une des revendications 6 ou 8, caractérisé par le fait qu'il comprend une bague (120) en matériau électriquement conducteur est associée aux colonnes (130), en regard des contacts (112,114) portés par le haut de colonne.
